# EUROPEAN PATENT SPECIFICATION

(11) **EP 4 442 160 B1**
(45) Date of publication and mention of the grant of the patent: **12.11.2025**
(21) Application number: 24166894.6
(22) Date of filing: 27.03.2024
(51) Int. Cl.: A47B 91/00, A47B 96/14, A47F 5/10, F16B 12/36

(54) **METAL SHELVING FOR DISPLAYING GOODS**
METALLREGALE ZUR WARENPRÄSENTATION
ÉTAGÈRE MÉTALLIQUE POUR LA PRÉSENTATION DE MARCHANDISES

(30) Priority: 04.04.2023 IT 202300006603
(43) Date of publication of application: 09.10.2024
(73) Proprietor: IMOLA RETAIL SOLUTIONS S.R.L., 40026 Imola (BO) (IT)
(72) Inventor: PEDOCCHI, Marco, 40139 Bologna (IT); PASSANTI, Andrea, 48012 Bagnacavallo RA (IT)
(74) Representative: Pietri, Simona

(56) References cited:
- EP-A1- 2 807 958

## Description

The present invention relates to a metal shelving for displaying goods of the so-called gondola type, i.e., with shelves extending cantilevered symmetrically opposite to the sides of a supporting structure. In particular, the metal gondola shelving according to the invention is made with a modular system.

As known, modular systems comprise a plurality of elements that are reversibly assembled together to create sales displays for retail spaces.

A traditional modular system usually comprises upright elements, crosspiece elements, beam elements, base elements and shelf elements.

These elements, in a number that varies depending on the type of structure to be built, are reversibly coupled together to make the shelving and generally any type of commercial furniture/display unit.

The advantage of a modular system of this type is precisely that the elements can be easily assembled and disassembled, making it possible to create different types of structures that can be modified and/or disassembled even after assembly or with the goods on display already arranged.

Going into further detail, a typical sales area shelving traditionally consists of a pair of uprights at the lower end of which they are mounted cantilevered bases that rest on the ground and support the structure. Above the cantilevered and squared off bases, a plurality of mutually overlapping shelves are mounted, extending between the pair of uprights; the goods on display will be placed on the shelves .

Further, the lower head of each upright is associated with an adjustable foot that allows the upright to adjustably rest on the ground.

In this background art, a prior Patent, EP2807958, is known which specifically relates to a system for assembling the base to an upright; this assembly system, which is reversible, is particularly advantageous as it is easy to adjust and disassemble (even when the display unit is loaded).

In particular, in such a system, the upright provides an array of slots on a frontal face which will be facing, during assembly, the display direction. Both the base and the shelves cling on these slots.

In the lateral face, perpendicular and contiguous to the aforementioned frontal face, a hole is formed for the passage of at least one pin arranged transversally to the main extension of the upright.

At one proximal end of the base, i.e. the end intended to couple with the frontal face of the upright, a pair of hooks and a pair of lugs with holes are provided. Hooks and lugs are placed at opposite ends of a planar tab extending in linear continuation from the base itself. The hooks are open downwards so that they cling on the slots like a hook.

During assembly, the hole in each lug matches the hole made in the upright and thus the transverse pin affects both the upright and the base, stabilising the connection and preventing it from oscillating relative to a transverse axis.

One of the advantages of this well-known system is that, thanks to the downward opening of the hooks, the operation of disassembling the base can also be carried out with the shelf loaded with goods or in any case already assembled.

However, there are other examples of upright/base pairs where the base provides projecting hooks with an upward opening that engage in slots made in the upright and perforated lugs intended for engagement with the transverse pin, however none of them achieves the advantage of disassembling the base even when the shelf is assembled or full.

Examples of such solutions are described in prior publications ES2160501 and FR2956171.

Having said that, these known systems still have some drawbacks and therefore room for improvement.

In particular, in order to create a gondola shelving structure, i.e. one with shelves on both sides of the upright, it is necessary to have an upright of at least 60 mm. In fact, the assembly of opposite bases requires sufficient space to have at least two holes placed side by side, one associated with the pin of each base. This limitation prevents the use of this system for the assembly of gondola shelving with thin uprights, i.e. less than 60 mm. Thin uprights commonly of 30 mm are used to make single-base shelving, so-called "wall shelving".

In fact, it is nowadays necessary to have small-size gondola shelving, for example to contain products that are not excessively heavy.

At the same time, the possibility of using a same upright to make either a wall shelving or a gondola shelving is an attractive solution from the point of view of modularity, affordability, etc. In fact, there is an increasing need to have as few types of elements as possible in order to reduce production and storage costs.

However, as mentioned, the known system does not allow this possibility, precisely because there is no physical space, on small-size uprights, for assembling two opposite bases in a gondola configuration.

The object of the present invention is to provide a gondola-type metal shelving made with a modular system involving a thin upright and two opposite bases.

The characteristics and advantages of the shelving according to the present invention will appear more clearly from the following description of an embodiment thereof, provided by way of non-limiting example with reference to the appended drawings wherein:
- Figure 1 shows a detail of an assembled shelving according to the invention, specifically, the figure shows the lower head of an upright with two ground support bases assembled in an opposite configuration;
- Figure 2 is an exploded view of the detail of the shelving in Figure 1;
- Figure 3 is a section view according to a longitudinal plane YZ of the shelving detail in the previous figures;
- Figure 4 is a perspective view of the section of Figure 3.
- Figure 5 is a section view according to a longitudinal plane XY; and
- Figures 6a and 6b show a different configuration of the shelving of the previous figures.

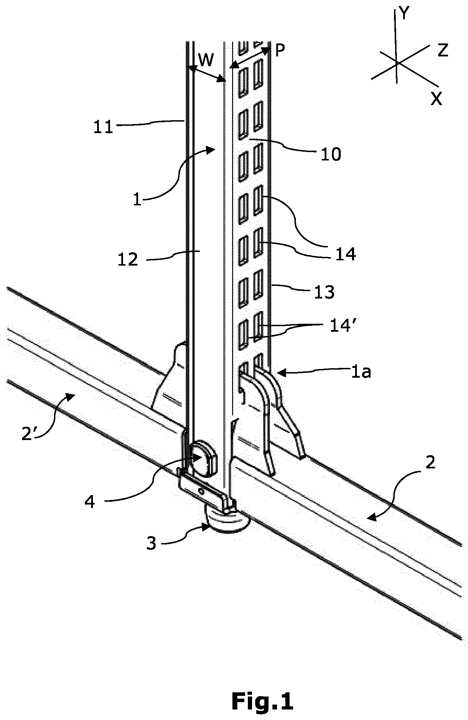

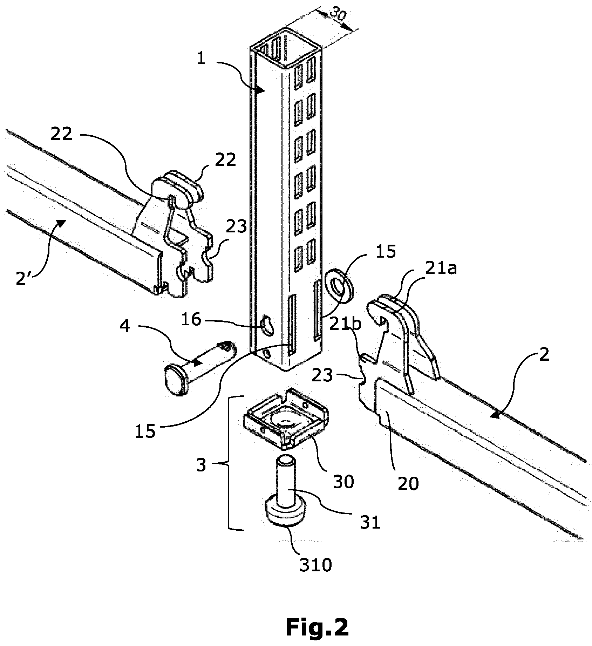

With reference to said figures, and in particular for the moment to Figures 1 and 2, the gondola shelving according to the invention is made with a modular system comprising at least the following elements in a number that varies depending on the type of shelving to be made: one upright 1, two bases 2 (or 2'), at least one adjustable foot assembly 3, 3', 3", one pin 4.

The upright 1 is represented by a hollow tubular element with a main extension along a longitudinal axis Y that is substantially perpendicular to the ground when the shelving is assembled and in use. The upright has a height, calculated on the axis Y, with value L.

A first transverse axis X, substantially parallel to the ground when the shelf is assembled and in use, perpendicular to the axis Y, and a second transverse axis Z perpendicular to X and Y to define a Cartesian triad, are further defined.

On the first transverse axis X, the width W of the upright is identified.

For the purposes of this description, a pillar with a width W of less than 60 mm will be deemed as "thin".

An upright with a width of 30 mm is shown in the figures (this measurement is shown in Figure 2, for example).

However, it is also possible to apply the herein described solutions to even thinner uprights, such as 20 mm.

On the second transverse axis Z, the depth P of the upright is measured. In modular systems, this depth is preferably constant.

The upright has a parallelepiped cross-section (i.e. considered in the plane XY), that is substantially rectangular or square.

The upright defines at least two opposite frontal faces 10, 11 and two lateral faces 12, 13 that are opposite and perpendicular to the frontal faces.

Further, on the frontal faces 10, 11, parallel arrays of slots 14 are made which extend along the longitudinal axis Y for the entire height L of the upright; the parallel arrays of slots define pairs 14' of slots aligned at the same height on the upright.

Each slot 14 is a through opening in the respective frontal face 10 (or 11).

At least one slot 15 is open at a lower head 1a of the upright. In the embodiment shown, there are two slots 15, mutually aligned on the axis Z.

A through-hole 16 is also open on at least one lateral face 12 (or 13).

Each base 2 (or 2') is commonly made from a parallelepiped cross-section profile. As already mentioned, the base 2 extends, when the shelf is assembled, cantilevered and squared off from the frontal face 10 (or 11) of the upright. The base rests on the ground with at least one distal end thereof (not shown in the figures), while it connects to the upright 1 with one proximal end thereof 20.

In this description, distal means the end that is furthest from the upright, proximal the end that is closest to the upright.

The modular system also comprises an adjustable foot assembly 3; the adjustable foot assembly comprises a baseplate 30 and an adjustable foot 31. The baseplate 30 is the component that engages with the head 1a of the upright and an adjustable foot 31, which is arranged along the longitudinal axis Y, is mounted thereon with a threaded engagement.

The adjustable foot 31 defines a ground-support base 310 of the upright.

It goes without saying that the adjustment of the threaded engagement between baseplate 30 and foot 31 makes it possible to adjust the ground support of the upright and consequently of the shelving.

Finally, the modular system includes a pin 4 capable of being inserted transversely, according to the transverse axis Z, inside the hole 16.

In the embodiment described, the hole 16 is made centrally to the lateral face 12 (or 13), where centrally means relative to the transverse axis X and thus the width W.

As mentioned above, the base 2 (or 2') connects to the upright with a proximal end 20 thereof.

For this purpose, a pair of tabs 21 protrudes from the proximal end 20, substantially aligned and spaced along the axis Z. In the preferred embodiment, the tabs are slab-shaped and each defines an upper portion 21a and a lower portion 21b, where upper means the portion place, during assembly, at a given height of the upright, and lower means the portion placed, during assembly, closer to the ground.

In at least one tab, at the upper portion 21a, a hook 22 is obtained, shaped like a hook and open downwards. Preferably the hook 22 is formed by shaping or machining the same tab 21.

Each base therefore has at least one hook 22 which engages in the respective and corresponding slot 14 of the upright.

Preferably each tab has its own hook, so each base has a pair of hooks 22 aligned along the axis Z.

The pair of hooks 22 of the base 2 engages in a respective pair 14' of slots at the same height as the upright 1.

Alternatively, if only one of the two tabs has a hook 22, the other tab may have a simply L-shaped or cut-out upper portion, or may have different shapes, though non-contributing in terms of active hooking to the slot.

Further, the lower portion 21b of each tab is shaped to penetrate the respective slot 15. Therefore, it has not only the right shape but also the right length to penetrate the upright and fit therein.

As will become clearer later, the flap 21b of the tab has a length equal to or lower than W/2.

The flap 21b also has a recess 23 representing an indentation on one of its free edges.

The recess 23 has a substantially semi-circular shape.

Each base therefore has a pair of indentations 23 mutually aligned along the axis Z.

In a preferred embodiment, the recess 23 is made at a certain height of the lower portion, a height that allows the recess 23 to correspond with the hole 16.

Turning now to the remaining figures, the gondola shelving requires two opposite bases 2 to be mounted on the upright 1. Preferably the bases are, during assembly, substantially aligned according to the axis X.

Each base 2 is assembled on a respective frontal face 10, 11 of the upright 1.

As is also clear from the figures, during assembly, the hooks and flaps 21a of each will face the inside of the upright.

In such a configuration, a seat 24 is defined by each recess 23 in conjunction with the respective recess of the opposite base.

In the solution shown in the figures, this seat 24 is defined by pairs spaced along the axis Z of recesses 23; it therefore has a substantially circular cross-section and is elongated according to the axis Z.

During assembly, the seat 24 corresponds with through-hole 16 and houses the pin 4.

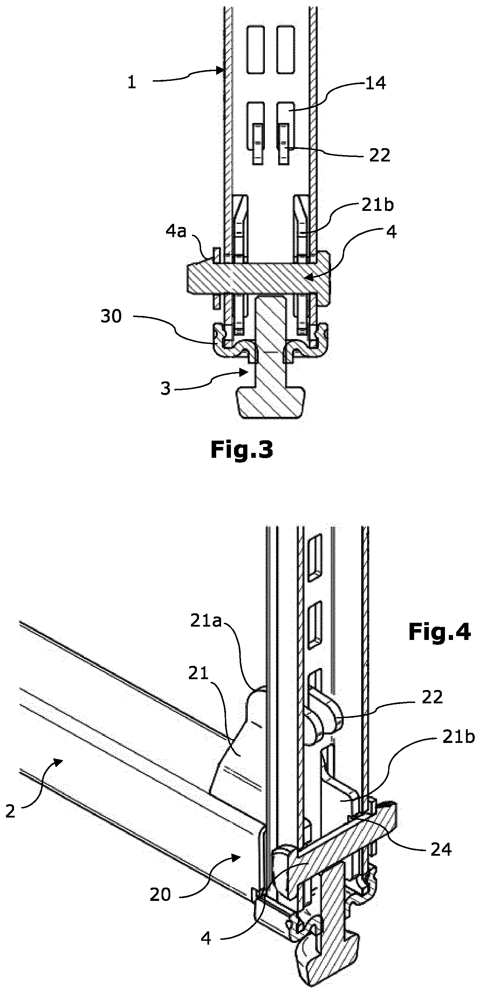

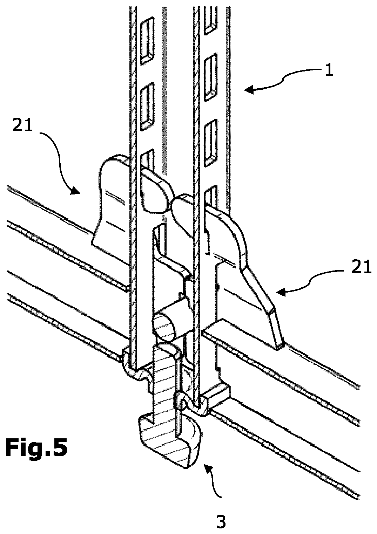

With reference to Figures 3, 4 and 5, the adjustable foot assembly 3 is partially fitted within the upright and, in particular, the adjustable foot 31 penetrates the upright while remaining below pin 4.

Solutions can also be envisaged in which the base provides only one flap 21a and consequently only one recess 23.

In the embodiment shown, as visible in particular in Figures 3 and 4, a hole 16' is also made on the face 13 opposite to the face 12. The two holes 16 and 16' are aligned in such a way as to allow the pin to pass completely through the upright in alignment with the axis Z and to terminate outside it from the opposite entry side.

The figure then shows an embodiment in which the pin has an anti-extraction tooth 4a. In this case, the recess will be shaped to also allow the passage of this element, having a corresponding notch.

In alternative embodiments, the pin can be replaced by a screw or any elongated element capable of being inserted transversally within the hole 16, of any cross-section.

As regards the assembly of the adjustable foot assembly 3, this is entirely similar to the already known prior art.

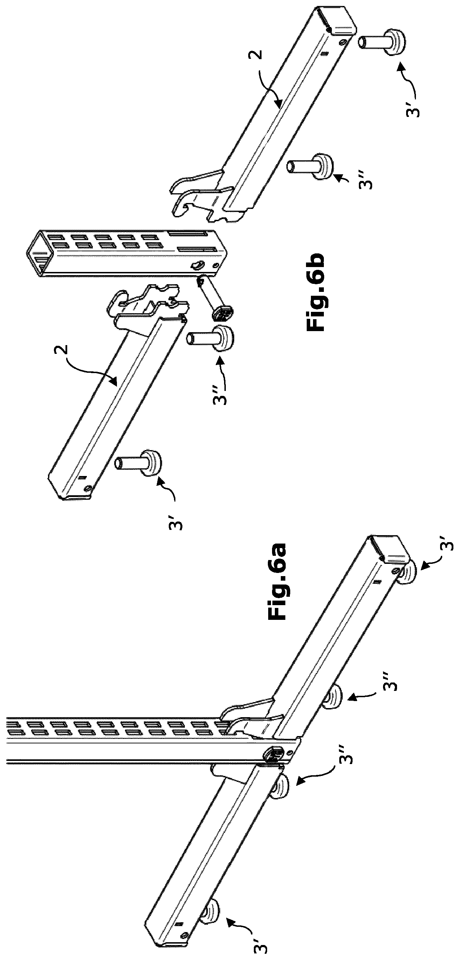

Figures 6a and 6b show an alternative configuration wherein the upright does not install any feet and stable support on the ground is provided by the same bases each installing two feet, one of which is distal 3' (i.e. further away from the upright) and one is proximal 3" (i.e. closer to the upright). These feet can also be of the adjustable type.

Advantageously, thus, the modular system allows the assembly of two opposite bases with a single pin simultaneously working on both of them.

This significantly reduces the inner space required for the upright, which can therefore also be thin, i.e. with a limited thickness, less than 60 mm.

This solution, for example, and as shown in the figures, also applies to 30-mm uprights, which to date have only been used for the assembly of wall-type shelving (i.e. with a single base).

It goes without saying that in addition to the elements described above, the shelving as a whole may comprise further elements such as a second upright on which two opposite bases are assembled in a similar manner as described. Between the two uprights, arranged at the desired distance, shelves can be assembled, for example, in a cantilevered and squared off configuration, or a backdrop surface or other elements that are traditionally part of modular systems for shop furniture.

The present invention has been described hereto with reference to preferred embodiments thereof. It is intended that other embodiments may exist which relate to the same inventive core, all falling within the scope of protection of the claims indicated below.

## Claims

1. A shelving such of gondola type, comprising at least: a upright (1) having a longitudinal development along a longitudinal axis (Y), two bases (2, 2'), a pin (4) capable of being arranged transversely to said upright along an axis (Z), in which said bases (2, 2') are each assembled opposite (2, 2') on a respective opposite front face (10, 11) of said upright and substantially aligned along a first transverse axis (X) and wherein:
- arrays of slots (14), aligned in pairs along a second transverse axis (Z), are made on each front face (10, 11) of this upright;
- each base (2) includes at least one hook (22) capable of engaging on a respective slot (14) to achieve engagement between said base and said upright;
- at least one slot (15) is provided on each front face (10, 11) of said upright;
- each base (2, 2') includes at least one flap (21b) capable of penetrating said slot (15) and fitting within said upright (1);
- said upright also comprises lateral faces (12, 13) perpendicular to said frontal faces, at least one of said lateral faces being drilled through (16);
said shelving being **characterised by** the fact that:
on said at least one flap (21b) a recess (23) is made;
said bases are mounted in such a way that their respective fins face the inside of said upright;
said recess (23) defines, in cooperation with the respective recess of said opposite mounted flap, a seat (24);
said seat (24) corresponding with said hole (16) and defining a slot for said pin (4).

2. The shelving according to claim 1 wherein said recess (23) is defined by a recess on the free edge of said at least one flap (21b).

3. The shelving according to claim 2, in which the recesses (23) of said bases (2, 2') facing each other, define two halves of said seat (24).

4. The shelving according to any of the preceding claims in which each base comprises a pair of flaps spaced along the transverse axis (Z) and a respective pair of recesses (23).

5. The shelving according to claim 4 wherein from a proximal end (20) of said base protrudes a pair of planar tabs (21) spaced along the transverse axis (Z), each tab defining an upper portion (21a) and a lower portion (21b).

6. The shelving according to claim 4 or 5 in which at the upper portion (21a) of at least one of two flaps is said hook (22), shaped like a hook and open downwards.

7. The shelving according to claim 5 or 6 in which said lower portion (21b) defines said flap.

8. The shelving according to any of the preceding claims, wherein said through-hole (16) is made centrally to said side face (12, 13), along said transverse axis (X).

9. The shelving according to claim 7 wherein said flap has a length equal to or less than half the width of the upright.

10. The shelving according to any one of the preceding claims, wherein an adjustable foot assembly (3) is accommodated within a lower head (1a) of said upright, for the purpose of supporting said upright on the floor.

11. The shelving according to claim 10 in which said adjustable foot assembly (3) is housed within said upright below the pin (4).

12. The shelving according to any one of claims 1 to 9 in which each base installs floor support feet at its ends, i.e. in a position distal and proximal to said upright.

13. The shelving according to any of the above claims, where said upright has a width of less than 60 mm.

14. The shelving according to the previous claim in which said upright (1) has a width of 30 mm.

## Patentansprüche

1. Regal eines Gondeltyps, umfassend mindestens: einen Ständer (1), der eine Längsausdehnung entlang einer Längsachse (Y) aufweist, zwei Basen (2, 2'), einen Stift (4), der in der Lage ist, quer zu dem Ständer entlang einer Achse (Z) angeordnet zu werden, wobei
die Basen (2, 2') jeweils gegenüberliegend (2, 2') an einer entsprechenden gegenüberliegenden Vorderfläche (10, 11) des Ständers montiert und im Wesentlichen entlang einer ersten Querachse (X) ausgerichtet sind und wobei:
- Arrays von Schlitzen (14), die paarweise entlang einer zweiten Querachse (Z) ausgerichtet sind, an jeder Vorderfläche (10, 11) dieses Ständers hergestellt sind;
- jede Basis (2) mindestens einen Haken (22) einschließt, der in der Lage ist, einen entsprechenden Schlitz (14) in Eingriff zu nehmen, um einen Eingriff zwischen der Basis und dem Ständer zu erreichen;
- mindestens ein Schlitz (15) an jeder Vorderfläche (10, 11) des Ständers bereitgestellt ist;
- jede Basis (2, 2') mindestens eine Klappe (21b) einschließt, die in der Lage ist, den Schlitz (15) zu durchdringen und innerhalb des Ständers (1) zu passen;
- der Ständer ebenso Seitenflächen (12, 13) umfasst, die senkrecht zu den Vorderflächen verlaufen, wobei mindestens eine der Seitenflächen durchbohrt (16) ist;
wobei das Regalsystem **gekennzeichnet ist durch** die Tatsache, dass:
an der mindestens einen Klappe (21b) eine Aussparung (23) hergestellt ist;
die Basen auf solche Weise montiert sind, dass ihre entsprechenden Rippen zu der Innenseite des Ständers weisen;
die Aussparung (23), in Zusammenwirkung mit der entsprechenden Aussparung der gegenüberliegenden montierten Klappe, einen Sitz (24) definiert;
wobei der Sitz (24) mit dem Loch (16) korrespondiert und einen Schlitz für den Stift (4) definiert.

2. Regal nach Anspruch 1, wobei die Aussparung (23) durch eine Aussparung an der freien Kante der mindestens einen Klappe (21b) definiert ist.

3. Regal nach Anspruch 2, bei dem die einander zugewandten Aussparungen (23) der Basen (2, 2') zwei Hälften des Sitzes (24) definieren.

4. Regal nach einem der vorstehenden Ansprüche, bei dem jede Basis ein Paar von Klappen, die entlang der Querachse (Z) beabstandet sind, und ein entsprechendes Paar von Aussparungen (23) umfasst.

5. Regal nach Anspruch 4, wobei von einem proximalen Ende (20) der Basis ein Paar von ebenen Laschen (21) vorsteht, die entlang der Querachse (Z) beabstandet sind, wobei jede Lasche einen oberen Abschnitt (21a) und einen unteren Abschnitt (21b) definiert.

6. Regal nach Anspruch 4 oder 5, bei dem sich an dem oberen Abschnitt (21a) mindestens einer von zwei Klappen der Haken (22) befindet, der hakenförmig und nach unten offen ist.

7. Regal nach Anspruch 5 oder 6, bei dem der untere Abschnitt (21b) die Klappe definiert.

8. Regal nach einem der vorstehenden Ansprüche, wobei das Durchgangsloch (16) mittig zu der Seitenfläche (12, 13) entlang der Querachse (X) hergestellt ist.

9. Regal nach Anspruch 7, wobei die Klappe eine Länge aufweist, die gleich oder kleiner als die Hälfte der Breite des Ständers ist.

10. Regal nach einem der vorstehenden Ansprüche, wobei eine verstellbare Fußanordnung (3) innerhalb eines unteren Kopfs (1a) des Ständers untergebracht ist, um den Ständer auf dem Boden abzustützen.

11. Regal nach Anspruch 10, bei dem die verstellbare Fußanordnung (3) innerhalb des Ständers unterhalb des Stifts (4) untergebracht ist.

12. Regal nach einem der Ansprüche 1 bis 9, bei dem jede Basis an ihren Enden, d. h. in einer Position distal und proximal zu dem Ständer, mit Bodenstützfüßen ausgestattet ist.

13. Regal nach einem der vorstehenden Ansprüche, wobei der Ständer eine Breite von weniger als 60 mm aufweist.

14. Regal nach dem vorstehenden Anspruch, bei dem der Ständer (1) eine Breite von 30 mm aufweist.

## Revendications

1. Rayonnage de type gondole comprenant au moins : un montant (1) ayant un développement longitudinal le long d'un axe longitudinal (Y), deux bases (2, 2'), une goupille (4) pouvant être agencée de manière transversale audit montant selon d'un axe(Z), dans lequel
lesdites bases (2, 2') sont chacune assemblées à l'opposé (2, 2') sur une face avant opposée respective (10, 11) dudit montant et sensiblement alignées le long d'un premier axe transversal (X) et dans lequel :
- des réseaux de fentes (14), alignés par paires le long d'un second axe transversal (Z), sont réalisés sur chaque face avant (10, 11) de ce montant ;
- chaque base (2) comporte au moins un crochet (22) pouvant venir en prise dans une fente respective (14) pour obtenir une mise en prise entre ladite base et ledit montant ;
- au moins une fente (15) est prévue sur chaque face avant (10, 11) dudit montant ;
- chaque base (2, 2') comporte au moins un rabat (21b) pouvant pénétrer dans ladite fente (15) et s'insérer à l'intérieur dudit montant (1) ;
- ledit montant comprend également des faces latérales (12, 13) perpendiculaires auxdites faces frontales, au moins l'une parmi lesdites faces latérales étant percée (16) ;
ledit rayonnages étant **caractérisé par le fait que** :
sur ledit au moins un rabat (21b), un renfoncement (23) est réalisé ;
lesdites bases sont montées de manière que leurs ailettes respectives sont orientées vers l'intérieur dudit montant ;
ledit renfoncement (23) définit, en coopération avec le renfoncement respectif dudit rabat monté à l'opposé, un siège (24) ;
ledit siège (24) correspondant audit trou (16) et définissant une fente pour ladite goupille (4).

2. Rayonnage selon la revendication 1, dans lequel ledit renfoncement (23) est défini par un renfoncement sur le bord libre dudit au moins un rabat (21b).

3. Rayonnage selon la revendication 2, dans lequel les renfoncements (23) desdites bases (2, 2') se faisant face, définissent deux moitiés dudit siège (24).

4. Rayonnage selon l'une quelconque des revendications précédentes, dans lequel chaque base comprend une paire de rabats espacés le long de l'axe transversal (Z) et une paire respective de renfoncements (23).

5. Rayonnage selon la revendication 4, dans lequel d'une extrémité proximale (20) de ladite base fait saillie une paire de languettes planes (21) espacées le long de l'axe transversal (Z), chaque languette définissant une partie supérieure (21a) et une partie inférieure (21b).

6. Rayonnage selon la revendication 4 ou 5, dans lequel, au niveau de la partie supérieure (21a) d'au moins l'un parmi les deux rabats, se trouve ledit crochet (22), en forme de crochet et ouvert vers le bas.

7. Rayonnage selon la revendication 5 ou 6, dans lequel ladite partie inférieure (21b) définit ledit rabat.

8. Rayonnage selon l'une quelconque des revendications précédentes, dans lequel ledit trou traversant (16) est réalisé au centre de ladite face latérale (12, 13), le long dudit axe transversal (X).

9. Rayonnage selon la revendication 7, dans lequel ledit rabat a une longueur égale ou inférieure à la moitié de la largeur du montant.

10. Rayonnage selon l'une quelconque des revendications précédentes, dans lequel un ensemble pied ajustable (3) est logé à l'intérieur d'une tête inférieure (1a) dudit montant, dans le but de soutenir ledit montant sur le sol.

11. Rayonnage selon la revendication 10, dans lequel ledit ensemble pied ajustable (3) est logé à l'intérieur dudit montant, sous la goupille (4).

12. Rayonnage selon l'une quelconque des revendications 1 à 9, dans lequel chaque base est équipée de pieds de soutien au sol à ses extrémités, c'est-à-dire dans une position distale et proximale par rapport au montant.

13. Rayonnage selon l'une quelconque des revendications précédentes, dans lequel ledit montant a une largeur inférieure à 60 mm.

14. Rayonnage selon la revendication précédente, dans lequel ledit montant (1) a une largeur de 30 mm.
